# EUROPÄISCHE PATENTSCHRIFT

(11) **EP 2 787 255 B1**
(45) Veröffentlichungstag und Bekanntmachung des Hinweises auf die Patenterteilung: **25.10.2017**
(21) Anmeldenummer: 14000979.6
(22) Anmeldetag: 17.03.2014
(51) Int. Cl.: F16J 15/06, F16C 35/073, F16C 33/76, F16C 19/06, F16J 15/54, F16D 3/50

(54) **Dichtanordnung sowie ein mit der Dichtanordnung ausgestatteter Flügelbetätiger**
Sealing assembly and a wing actuator equipped with the sealing assembly
Système d'étanchéité et actionneur à ailettes équipé dudit système d'étanchéité

(30) Priorität: 03.04.2013 DE 102013005588
(43) Veröffentlichungstag der Anmeldung: 08.10.2014
(73) Patentinhaber: dormakaba Deutschland GmbH, 58256 Ennepetal (DE)
(72) Erfinder: Hufen, Michael, D-42289 Wuppertal (DE); Wildförster, Thomas, D-58332 Schweim (DE)
(74) Vertreter: Balder IP Law, S.L.

(56) Entgegenhaltungen:
- CN-U- 201 971 056
- DE-U1- 20 113 972
- GB-A- 1 092 109
- JP-A- H06 241 238
- JP-A- H07 269 518
- JP-A- H09 310 763
- US-A- 4 153 260
- US-A1- 2006 119 047

## Beschreibung

Die Erfindung betrifft eine Dichtanordnung zum Abdichten einer Welle. Insbesondere kann die Dichtanordnung zum Abdichten der Welle gegenüber einem Lager dieser Welle und/oder einem Gehäuse, das die Welle umgibt, dienen. Weiterhin betrifft die Erfindung einen Flügelbetätiger, der mit der Dichtanordnung ausgestattet ist.

Der Begriff "Flügelbetätiger" umfasst Flügelantriebe, die in der Lage sind, einen Flügel sowohl zu öffnen als auch zu schließen. Ferner sind Vorrichtungen umfasst, die in der Lage sind, einen Flügel in nur eine Richtung zu bewegen, wie dies insbesondere bei Türschließern der Fall ist. Solch ein Flügelbetätiger umfasst im Rahmen der Anmeldung zumindest eine Welle, die aus einem Gehäuse des Flügelbetätigers heraustritt und eine Wirkverbindung mit dem Flügel ermöglicht. Somit kann der Flügelbetätiger über die Welle die Bewegung des Flügels bewirken.

Derartige Wellen sind in der Regel über Lager in einem Gehäuse des Flügelbetätigers frei rotierbar gelagert aufgenommen. Ferner ist im Bereich der Lager eine Schmierung vorgesehen, um insbesondere einem Lagerverschleiß vorzubeugen. Damit das dafür vorgesehene Schmiermittel im Wellenbereich nicht aus dem Gehäuse austreten kann, ist eine Abdichtung der Welle gegenüber dem Gehäuse notwendig.

Die DE 699 37 495 T2 zeigt beispielsweise eine modulare, dreiteilige Abdichtung, die zwischen einem rotierbaren Bauelement und einem festen Bauelement abdichtend angeordnet ist. Hierbei ist jedoch die hohe Anzahl an notwendigen Teilen sowie der damit verbundene konstruktive und montagetechnische Aufwand nachteilig. Insbesondere ist eine Positionierung des Dichtelements sehr aufwändig.

Die US 4 153 260 eine Gleitdichtung für verzahnte Wellenverbindungen, bestehend aus einem flexiblen, insbesondere elastisch verformbaren, Körper mit einer Reihe von sich in Umfangsrichtung abwechselnden Vorsprüngen und Zwischenräumen für einen abdichtenden Verzahnungseingriff mit den Längsrippen und Längsnuten der Welle, wobei die Zwischenräume eine Basis oder Grundfläche aufweisen und zwischen den sich in Umfangsrichtung gegenüberliegenden Flanken der Vorsprünge liegen.

Es ist Aufgabe der Erfindung, eine Dichtanordnung sowie einen mit der Dichtanordnung ausgestatteten Flügelbetätiger bereitzustellen, die bei einfacher und kostengünstiger Herstellung und Montage eine sichere und zuverlässige Abdichtung ermöglichen.

Die Aufgabe wird gelöst durch den Gegenstand der Ansprüche 1 und 10. Die Unteransprüche haben bevorzugte Weiterbildungen der Erfindung zum Inhalt.

Die erfindungsgemäße Dichtanordnung umfasst eine Welle sowie ein Dichtelement. Das Dichtelement weist einen ringförmigen Grundkörper auf, wobei eine Innenfläche des Grundkörpers eine Oberflächenkontur besitzt, die komplementär zu einer Oberflächenkontur einer Außenfläche der Welle ist. Daher kann das Dichtelement bevorzugt auf die Welle aufgebracht werden. Insbesondere kann das Dichtelement auf die Welle aufgeschoben werden. Weiter ist vorgesehen, dass die Innenfläche des Grundkörpers über den gesamten Umfang der Welle mit der Außenfläche der Welle in Kontakt bringbar ist. Auf diese Weise kann eine dichtende Verbindung zwischen dem Dichtelement und der Welle hergestellt werden.

Dies bedeutet insbesondere, dass die Innenfläche des Grundkörpers vollständig mit der Außenfläche der Welle in Kontakt steht. Schließlich ist vorgesehen, dass zumindest ein Vorsprung des Dichtelements in eine Ausnehmung der Welle eingreift. Der Grundkörper des Dichtelements weist ein Kernelement auf, das von einem Mantelelement vollständig umgeben ist. Ein Elastizitätsmodul des Kernelements beträgt einen Wert zwischen dem 20-fachen und dem 200-fachen des Elastizitätsmoduls des Mantelelements. Daher kann das Dichtelement insbesondere eine Keilwelle abdichten. Alternativ oder zusätzlich ist vorgesehen, dass zumindest ein Vorsprung der Welle in eine Ausnehmung der Dichtung eingreift. Somit kann die Dichtanordnung auch insbesondere eine Zahnwelle abdichten. Insgesamt ist es daher mit der erfindungsgemäßen Dicht-anordnung möglich, beliebig geformte Wellen, insbesondere Vielkeilwellen und/oder Zahnwellen, sicher und zuverlässig abzudichten.

Bevorzugt ist der Grundkörper des Dichtelements derart ausgebildet, dass dieser ein sich radial erstreckendes scheibenförmiges Element umfasst und eine Vielzahl von Nasen aufweist, wobei sich die Nasen von dem scheibenförmigen Element bevorzugt axial erstrecken. Auf diese Weise entsteht insbesondere eine L-förmige Ausbildung des Dichtelements, wobei insbesondere vorgesehen ist, dass die Nasen auf der Außenfläche der Welle aufliegen.

Besonders bevorzugt ist vorgesehen, dass die Nasen in komplementäre Ausnehmungen der Welle eingreifen können. Dies ermöglicht einen sehr einfachen Aufbau sowie eine kostengünstige Montage, da durch die Nasen die einzelnen Ausnehmungen der Welle sicher und zuverlässig abdichtbar sind.

Alternativ oder zusätzlich ist vorgesehen, dass die Nasen als Radialdichtung ausgebildet sind und/oder das scheibenförmige Element als Axialdichtung ausgebildet ist. Durch diese Doppelfunktion kann insbesondere eine sehr sichere und zuverlässige Dichtwirkung erhalten werden. Insbesondere kann durch die zuvor beschriebene L-Form ein gegen die Welle abzudichtendes Element an zwei Stellen kontaktiert werden. Besonders bevorzugt kann ein Lager der Welle auf die Außenfläche der Welle aufgebracht werden, wobei die Nasen des Dichtelements die Ausnehmungen der Welle unterhalb des Lagers abdichten können. Das sich radial erstreckende scheibenförmige Element dient dann als Axialdichtung, so dass eine sehr sichere Dichtwirkung erzielt wird.

Bevorzugt ist die Oberflächenkontur der Innenfläche des Grundkörpers verformbar. Besonders bevorzugt ist die Oberflächenkontur der Innenfläche des Grundkörpers elastisch verformbar. In diesem Fall ist bevorzugt vorgesehen, dass eine elastische Rückstellkraft das Dichtelement an die Welle anpressen kann. Beispielsweise kann ein Abmaß der Innenfläche des Grundkörpers geringer sein als ein Abmaß der Außenfläche der Welle, auf die das Dichtelement aufgebracht werden soll. In diesem Fall wird das Dichtelement bei Aufbringen auf die Welle bevorzugt gedehnt, so dass eine elastische Rückstellkraft das Dichtelement auf die Außenfläche der Welle aufpresst. Diese Aufpresskraft kann eine hohe Dichtung bewirken.

In einer vorteilhaften Ausführungsform der Erfindung weist der Grundkörper des Dichtelements ein Kernelement auf, das von einem Mantelelement umgeben ist. Besonders bevorzugt ist das Kernelement vollständig von dem Mantelelement umgeben. Durch den zweigeteilten Aufbau des Grundkörpers ist es daher möglich, dass die einzelnen Komponenten unterschiedliche Aufgaben wahrnehmen. So kann insbesondere das Kernelement für eine Stabilität des Dichtelements sorgen, während das Mantel-element eine Dichtwirkung sicherstellt. Dazu ist besonders bevorzugt vorgesehen, dass Kernelement und Mantelelement aus unterschiedlichen Materialien bestehen.

In einer besonders vorteilhaften Ausführungsform ist das Kernelement steifer als das Mantelelement ausgebildet. Unter "steif" ist hier die gewöhnliche Definition der technischen Mechanik anzusehen. Dies bedeutet, dass der Widerstand des Mantelelements gegen Verformung geringer ist als der Widerstand des Kernelements gegen Verformung. Insbesondere kann ein Elastizitätsmodul des Kernelements einen Wert zwischen dem 20-fachen und dem 200-fachen des Elastizitätsmoduls des Mantelelements betragen. Besonders bevorzugt kann das Kernelement einen Elastizitätsmodul von ungefähr 200 kN/mm² und der E-Modul des Mantelelements etwa 1 bis 5 kN/mm² betragen. Unter "ungefähr" ist hier insbesondere eine Abweichung von ±10% zu verstehen.

Weiterhin ist es vorteilhaft, wenn das Kernelement aus einem metallischen Werkstoff und/oder aus einem Kunststoff gefertigt ist und/oder das Mantel-element aus einem Elastomer gefertigt ist. Auf diese Weise wird die zuvor beschriebene Aufgabentrennung sehr vorteilhaft realisiert. Durch den metallischen Werkstoff und/oder den Kunststoff wird eine steife Struktur gebildet, die insbesondere kaum elastisch verformbar ist. Umgeben ist diese Struktur von einem Elastomer, das insbesondere sehr gut elastisch verformbar ist. Somit kann das Elastomer eine sichere und zuverlässige Dichtwirkung herstellen, während der metallische Werkstoff und/oder der Kunststoff eine einfache und kostengünstige Montage der Dichtanordnung erlaubt, da sich insbesondere die Dichtung bei der Montage nur gering verformt.

In einer vorteilhaften Ausführungsform der Dichtanordnung ist das Dichtelement einem Schmiermittel, insbesondere einem Schmierfett, aussetzbar. Somit kann das Dichtelement bevorzugt direkt in einer Schmiermittel-behafteten Umgebung eingesetzt werden. Besonders bevorzugt ist dabei vorgesehen, dass das Dichtelement eine Dichtigkeit gegen ein Kriechverhalten des Schmiermittels sicherstellt.

Weiterhin ist vorteilhafterweise vorgesehen, dass das Dichtelement gegen ein Schmiermittel, insbesondere gegen ein Schmierfett, beständig ist. Dies ermöglicht insbesondere ein direktes Einsetzen des Dichtelements in Schmiermittel-behafteter Umgebung, wobei eine lange Lebensdauer des Dichtelements sichergestellt ist. Daher ist die Dichtanordnung im Betrieb sehr wartungsarm. Weiterhin ist die Dichtanordnung sehr zuverlässig im Betrieb.

Die Erfindung betrifft weiter einen Flügelbetätiger, der insbesondere zum Bewegen eines mit dem Flügelbetätiger verbundenen Flügels einer Türe ausgebildet ist. Der Flügelbetätiger umfasst ein Gehäuse sowie einen in dem Gehäuse angeordneten Antriebsabschnitt. Der Antriebsabschnitt wiederum umfasst eine Abtriebswelle, die insbesondere eine Zahnwelle oder Keilwelle sein kann und die aus dem Gehäuse herausragt. Auf diese Weise kann die Abtriebswelle mit dem ebenfalls außerhalb des Gehäuses befindlichen Flügel verbunden werden. Somit ist es dem Flügelbetätiger möglich, eine von dem Antriebsabschnitt erzeugte Bewegung auf den Flügel aufzubringen. Weiterhin umfasst der Flügelbetätiger zumindest eine Dichtanordnung, wie zuvor beschrieben, wobei das Dichtelement der Dichtanordnung auf der Abtriebswelle aufgebracht ist.

Dabei ist besonders bevorzugt vorgesehen, dass das Dichtelement die Abtriebswelle zu dem Gehäuse oder zu einem Lager der Abtriebswelle abdichtet. Damit ist der erfindungsgemäße Flügelbetätiger sehr einfach zu montieren und erlaubt dank der Verwendung des zuvor beschriebenen Abdichtelements eine sichere und zuverlässige Abdichtung der Abtriebswelle gegenüber dem Gehäuse oder dem Lager.

Weitere Merkmale und Vorteile der Erfindung ergeben sich aus der nachfolgenden Beschreibung bevorzugter Ausführungsformen in Verbindung mit den beigefügten Zeichnungen. Es zeigen:
- Figur 1: einen Drehtürantrieb im Ausschnitt,
- Figur 2: eine Dichtanordnung für den Antrieb von Figur 1, gemäß einer ersten Ausführungsform der Erfindung,
- Figur 3: die Anordnung von Figur 2 mit gelöster Muffe in Teil-Explosionsansicht,
- Figur 4: die Anordnung von Figur 3 mit gelöster Abtriebswelle in TeilExplosionsansicht,
- Figur 5: die Anordnung von Figur 2 in Explosionsansicht,
- Figur 6: die Anordnung von Figur 2 aus einer zu Figur 2 entgegengesetzten Perspektive und ohne Lager,
- Figur 7: eine Schnittansicht einer zu Figur 2 abgewandelten Dichtanordnung,
- Figur 8: eine Schnittansicht der Anordnung von Dichtung und Abtriebswelle entlang einer Linie A - A in Figur 3,
- Figur 9: eine Schnittansicht einer Dichtanordnung gemäß einer zweiten Ausführungsform der Erfindung,
- Figur 10: Dichtungen gemäß anderen Ausführungsformen der Erfindung,
- Figur 11: eine schematische Ansicht des Dichtelements gemäß einer weiteren Ausführungsform der Erfindung, und
- Figur 12: eine weitere schematische Ansicht des Dichtelements gemäße der weiteren Ausführungsform der Erfindung.

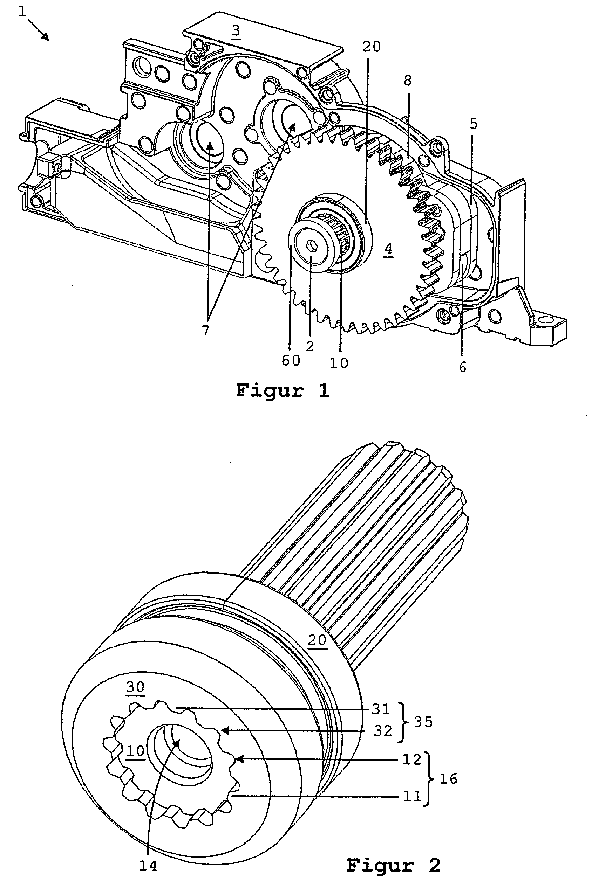

Figur 1 zeigt Teile eines beispielhaft als Drehtürantrieb ausgebildeten Flügelbetätigers 1. Der Antrieb 1 umfasst eine Abtriebswelle 10. Diese ist über beispielhaft zwei Lager 20, von denen nur das vordere sichtbar ist, in einem Gehäuse 3 eines Antriebsabschnitts des Türantriebs 1 frei rotierbar gelagert aufgenommen.
Der Antriebsabschnitt umfasst ferner ein Zahnrad 4, das drehfest auf der Abtriebswelle 10 angeordnet ist und über weitere, nicht dargestellte Getriebeteile mit einem ebenfalls nicht abgebildeten Motor wirkverbunden ist. Diese sind über Achsen/Wellen in Lageröffnungen 7 des Gehäuses 3 frei rotierbar oder ortsfest aufgenommen. Der Motor ist dadurch in der Lage, die Abtriebswelle 10 in eine vorbestimmte Richtung zu rotieren.

Hinter dem Zahnrad 4 ist auf der Abtriebswelle 10 ferner eine Nocke 8 drehfest angeordnet. In Fig. 1 rechtsseitig hinter dem Zahnrad 4 ist zudem eine Rollenhalterung 5 angeordnet. In dieser ist eine Andruckrolle 6 um eine Achse parallel zur Rotationsachse der Abtriebswelle 10 frei rotierbar angeordnet. Die Andruckrolle 6 wird von einer nicht dargestellten Schließerfeder hier von rechts derart gegen die Nocke 8 gedrängt, dass die Schließerfeder damit eine Rotation der Abtriebswelle 10 in eine zur Motor-Antriebsrichtung entgegengesetzte Richtung bewirken kann.

Die Abtriebswelle 10 ist an beiden freien Enden jeweils mit einem Deckel 60 versehen, der mithilfe einer jeweiligen Schraube 2, bevorzugt mit Innensechskant, an der Abtriebswelle 10 befestigt ist. Der Deckel 60 dient insbesondere dem optischen Abschluss im Bezug auf eine hier nicht dargestellte Antriebsabdeckung.

Figur 2 zeigt die Abtriebswelle 10 von Figur 1 in größerem Detail und im Rahmen einer Dichtanordnung für den Antrieb 1. Die Abtriebswelle 10 ist an ihrem in Fig. 2 nach vorne weisenden Ende gestaltet, mit einem ebenfalls nicht dargestellten Flügel wirkverbunden zu werden. Dies kann im gezeigten Beispiel mittels eines Gestängearms erfolgen, der über ein Einschrauben einer Schraube in eine korrespondierende Schrauböffnung 14 der Abtriebswelle 10 an dieser drehfest fixiert wird. Um den Gestängearm mit der Abtriebswelle 10 drehfest wirkverbinden zu können, ist eine Muffe 30 vorgesehen, die eine unrunde Innenkontur hier in Form einer Vielkeil-Innenkontur 35 aufweist. Diese ist mittels einer Mehrzahl nach innen weisender Vorsprünge 31 und Ausnehmungen 32 gebildet, von denen aus Übersichtlichkeitsgründen jeweils nur einer bzw. eine mit Bezugszeichen versehen ist.

Die Vorsprünge 31 und Ausnehmungen 32 erstrecken sich in Richtung Längserstreckung der Muffe 30. Die Muffe 30 steht etwas über das vordere Ende der Abtriebswelle 10 hervor und ermöglicht somit, einen korrespondierenden Vorsprung des Gestängearms, mit einer zur Innenkontur 31, 32 vorzugsweise komplementären Außenkontur, drehfest aufzunehmen. Der Gestängearm ist vorzugsweise so ausgebildet, dass er an der ihm zugewandten Fläche der Muffe 30 zu liegen kommt.

In die Schrauböffnung 14 ist eine nicht dargestellte, zuvor durch den Gestängearm und die Muffe 30 hindurch geführte Schraube hineingeschraubt und fixiert damit zumindest den Gestängearm an der Abtriebswelle 10.

Die Muffe 30 ist exemplarisch zwischen dem Gestängearm und einem als Wälzlager ausgebildeten Lager 20 angeordnet. Das Lager 20 ist gestaltet, die Abtriebswelle 10 in einem Gehäuse des Antriebs 1 frei rotierbar zu lagern.

Die Abtriebswelle 10 ist zumindest an ihrem der Muffe 30 zugewandten Ende derart unrund ausgebildet, dass die Muffe 30 beim Aufschieben auf dieses Ende der Abtriebswelle 10 mit dieser formschlüssig und drehfest in Eingriff gelangt. Im gezeigten Beispiel ist dieses Ende als Vielkeilwelle ausgebildet, weist also eine Oberflächenkontur 16 mit Vorsprüngen 11 und Ausnehmungen 12 auf, über die sie mit der korrespondierenden Innenkontur 31, 32 der Muffe 30 in Wirkeingriff gelangt. Auch hier sind aus Übersichtlichkeitsgründen jeweils nur ein Vorsprung 11 und eine Ausnehmung 12 mit Bezugszeichen versehen.

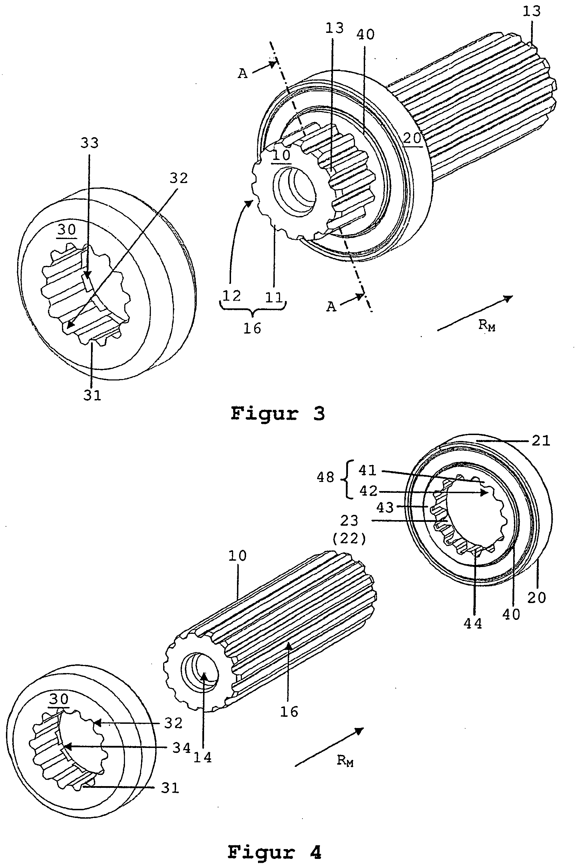

Figur 3 zeigt die Anordnung von Figur 2 in Teil-Explosionsansicht in einem Zustand, in dem die Muffe 30 von der sonstigen Dichtanordnung gelöst ist. Wie zu erkennen, erstrecken sich die Vorsprünge 31 vorzugsweise nicht über die gesamte Länge der Muffe 30. Vielmehr enden sie etwas vor dem hier hinteren Ende der Muffe 30. Dadurch entsteht eine ringförmige Freimachung bzw. in Richtung Abtriebswelle 10 weisende, ringförmige Eckausnehmung 33.

Um das Aufschieben der Muffe 30 zu erleichtern, weisen hier die Vorsprünge 11 an ihren der Muffe 30 zugewandten Ende Anlaufschrägen 13 auf, die sich in Richtung Muffe 30 aufeinander zu erstrecken, und von denen aus Übersichtlichkeitsgründen nur eine mit Bezugszeichen versehen ist.

Alternativ oder zusätzlich weisen die Vorsprünge 31 zumindest an ihrem der Abtriebswelle 10 zugewandten Ende hier nicht erkennbare Anlaufschrägen 36 auf, die sich in Richtung Abtriebswelle 10 voneinander weg erstrecken

Wie ferner zu erkennen, ist im Montagezustand zwischen Muffe 30 und Lager 20 eine Dichtanordnung mit einem Dichtelement 40 gemäß einer ersten Ausführungsform der Erfindung angeordnet. An einer der Muffe 30 abgewandten Seite des Dichtelements 40 schließt sich also das Lager 20 an.

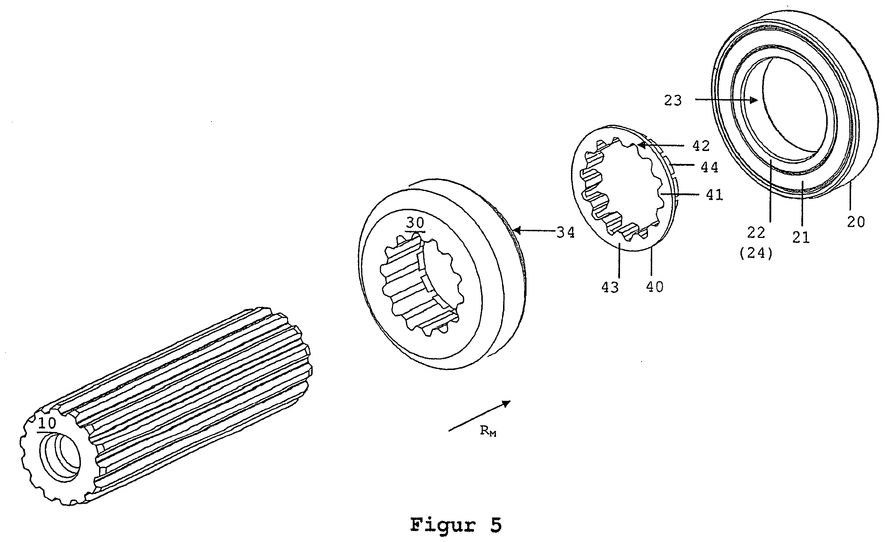

Figur 4 zeigt die Anordnung von Figur 3, wobei auch die Abtriebswelle 10 von der Anordnung Lager 20 und Dichtelement 40 gelöst dargestellt ist. Figur 5 wiederum zeigt die Dichtanordnung in vollständiger Explosionsansicht.

Wie zu erkennen, ist das Dichtelement 40 ebenfalls ringartig ausgebildet. Es weist an seinem der Muffe 30 zugewandten Seite einen scheibenförmiges Element 43 auf, mit dem es am Lager 20 und an der Muffe 30 abdichtend zur Anlage kommt, wie später näher erläutert. An dem scheibenförmigen Element 43 sind Nasen 44 angeformt bzw. ausgebildet.

Die Nasen 44 stehen in eine Richtung R_{M} des Einschiebens des Dichtelements 40 in das Lager 20 vom scheibenförmigen Element 43 hervor. Die Nasen 44 sind so gestaltet, dass sie, in Richtung R_{M} gesehen, Vorsprünge 41 bilden, die analog den Vorsprüngen 31 der Muffe 30 in Richtung des hohlen Innenraums der Dichtung 40, also auch zugleich vom Abschnitt 43, hervorstehen. D. h. zwischen unmittelbar benachbarten Vorsprüngen 41 sind Ausnehmungen 42 ausgebildet, die analog den Ausnehmungen 32 der Muffe 30 ausgebildet sind. Die Vorsprünge 41 und die Ausnehmungen 42 bilden dabei eine Oberflächenkontur 48 des Dichtelements 40.

Das Dichtelement 40 liegt mit den Vorsprüngen 41 bzw. deren nach außen weisenden Flächen am Lager 20 an. Genauer liegen die Vorsprünge 41 mit diesen Flächen an einer ihnen zugewandten Innenkontur bzw. -fläche 23 eines Innenrings 22 des Lagers 20 vorzugsweise angepresst an.

Vorzugsweise bilden die Nasen 44 mit ihrer der Oberflächenkontur 48 und damit der Abtriebswelle 10 abgewandten, nicht bezeichneten Flächen eine Außenkontur, die, im Querschnitt gesehen, vorzugsweise einer Kreislinie folgt, was das Einschieben des Dichtelements 40 in den Lagerring 22 erleichtert.

In Verbindung mit Figur 3 wird klar, dass das Dichtelement 40 mit den Vorsprüngen 41 zwischen der Oberflächenkontur 16 der Abtriebswelle 10 und der korrespondierenden Innenkontur 23 des Innenrings 22 des Lagers 20 angeordnet ist. Vorzugsweise erfolgt dies mittels Verklemmens zwischen Abtriebswelle 10 und Lager 20, wie ebenfalls später näher erläutert.

Das Lager 20 ist in bekannter Weise an einem ortsfesten Teil des sonstigen Antriebs 1, vorteilhafterweise in einer Gehäusewandung, ortsfest eingesetzt. Beim hier als Wälzlager ausgebildeten Lager 20 erfolgt dies in bekannter Weise über dessen Außenring 21, der in Bezug auf den Innenring 22 frei rotierbar ist. Die Abtriebswelle 10 ist, wie vorstehend angegeben, mit dem sonstigen Antriebsabschnitt wirkverbunden und dadurch
oder durch zusätzliche Maßnahmen in bekannter Weise in Bezug auf das Lager 20 ortsfest angeordnet. D. h. die Abtriebswelle 10 und das Lager 20 sind im Wesentlichen daran gehindert, ihre Montageposition entlang der Richtung R_{M} von sich aus zu verändern.

Wie vorstehend angegeben, erfolgt eine erfindungsgemäße Abdichtung zwischen dem scheibenförmigen Element 43 und dem Innenring 22 des Lagers 20. Dabei liegt das scheibenförmige Element 43 an einer Fläche 24 des Innenrings 22 abdichtend an, die entgegen der Richtung R_{M} weist, also der Muffe 30 zugewandt ist. Um die für die Abdichtung notwendige Relativposition es Dichtelements 40 zum Lager 20 zu gewährleisten, ist exemplarisch die Muffe 30 vorgesehen. Sie liegt mit einer dem Dichtelement 40 zugewandten Fläche 34 nunmehr an der dem Lager 20 abgewandten Seite des Abschnitts 43 des Dichtelements 40 an.

Die Muffe 30 schließt die Abtriebswelle 10 in Bezug auf den sonstigen Antrieb 1 nach außen hin ab, bildet also ein Abschlussteil.

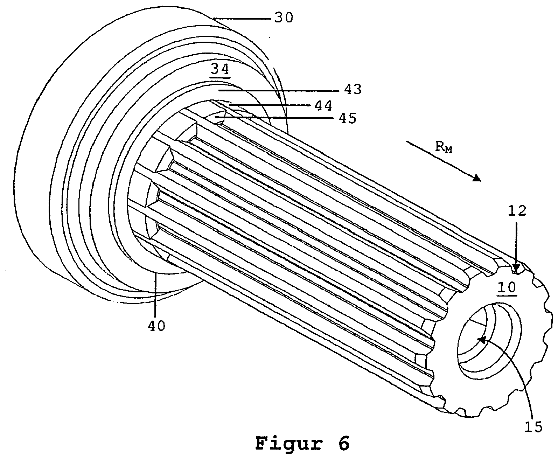

Figur 6 zeigt die Anordnung von Figur 2 von der dortigen Rückseite der Anordnung her. Das Lager 20 ist aus Beschreibungsgründen weggelassen. Hier wird die Rolle der Nasen 44 es Dichtelements 40 deutlich. Diese sind außerhalb ihrer hier nach außen weisenden Kontaktbereiche mit dem Lager 20 nahezu vollständig in den korrespondierenden Ausnehmungen 12 der Abtriebswelle 10 aufgenommen. In den Kontaktbereichen sind sie zwischen Lager 20 und Abtriebswelle 10 vorzugsweise eingeklemmt.

Die Nasen 44 weisen an ihren der Muffe 30 abgewandten Endabschnitten Anlaufschrägen 45 auf, die sich in Richtung R_{M} aufeinander zu erstrecken. Dies erleichtert das Einschieben des Dichtelements 40 in das Lager 20 bzw. das Aufschieben des Lagers 20 auf die Nasen 44.

Ferner ist Figur 6 so zu verstehen, dass das scheibenförmige Element 43 an der Fläche 34 der Muffe 30 abdichtend anliegt. Ferner ist am rechten Ende der Abtriebswelle eine Schrauböffnung 15 ausgebildet. Diese dient wie die Schrauböffnung 14 dem Anbringen eines Deckels 60 und/oder eines Gestängearms.

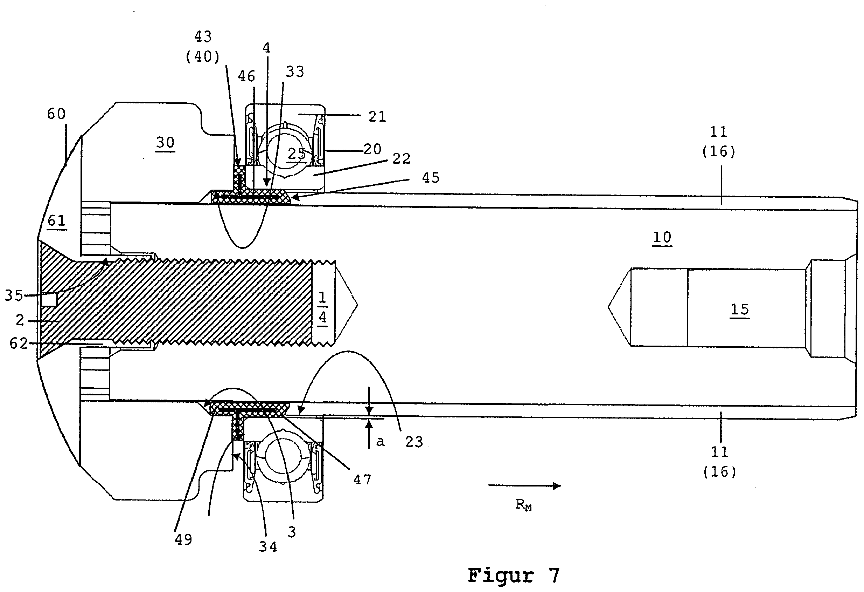

Figur 7 zeigt eine zu Figur 3 etwas abgewandelte Dichtanordnung als Längsschnitt, also mitten durch die Dichtanordnung in Richtung quer zur Montagerichtung R_{M}.

Die Innenkontur 23 des Innenrings 22 des Lagers 20 weist im Rahmen des gezeigten kreisrunden Querschnitts vorzugsweise einen Durchmesser auf, der geringfügig größer ist als der Durchmesser eines um die Vorsprünge 11 bzw. die Oberflächenkontur 16 legbaren Kreises. D. h. das Lager 20 weist in der gezeigten Stellung zu den Vorsprüngen 11 eine Abstand a auf. Die zwischen der Abtriebswelle 10 und dem Lager 20 angeordneten Nasen 44 des Dichtelements 40 füllen in ihrem Bereich den Zwischenraum zwischen Abtriebswelle 10 und Lager 20 vorzugsweise vollständig aus und sind vorzugsweise eingeklemmt. Dies ermöglicht einen drehfesten Sitz der Abtriebswelle 10 in Bezug auf den Innenring 22 des Lagers 20. Ein anderer Vorteil ist, dass Lager 20 und Abtriebswelle 10 hinsichtlich der Lagerung nicht passend zueinander ausgebildet sein müssen. Vielmehr übernimmt das Dichtelement 40 diese Anpassung. D. h. das Dichtelement 40 ist in der Lage, Lager und Abtriebswelle 10 zueinander eigentlich nicht passender Ausbildung miteinander so montieren zu können, dass die Abtriebswelle 10 im jeweiligen Lager frei rotierbar gelagert aufgenommen ist. Dies ermöglicht beispielhaft die Verwendung eines hier dargestellten, standardisierbaren Wälzlagers 20 mit der Vielkeilwelle.

Wie zu erkennen, umfasst das Dichtelement 40 vom Aufbau her zwei Bereiche: einen schwarz dargestelltes, hier ringartig ausgebildetes Kernelement 46 und ein mittels Kreuzschraffur dargestelltes, ebenfalls ringartig ausgebildetes Mantelelement 47. Das Kernelement 46 ist aus formstabilem Material wie Metall oder plastischem Kunststoff gebildet. Gegebenenfalls ist das Kernelement 46 zudem zu einem hier als im Querschnitt T-förmigen Ring ausgebildeten, die Formstabilität verbessernden Profil geformt. Das Kernelement 46 verringert bzw. beseitigt dabei die Gefahr, dass die Nasen 44 beim Aufschieben auf die Abtriebswelle 10 bzw. beim Einschieben in das Lager 20 im Wesentlichen quer zur Richtung R_{M} abgelenkt werden. Sollte dies passieren, könnte sonst eine Nase 44 beim nachfolgenden Einschieben der Anordnung Abtriebswelle 10 - Dichtelement 40 in das Lager 20 bzw. der Abtriebswelle 10 in die Anordnung Dichtelement 40 - Lager 20 zwischen einen Vorsprung 11 und den Lager-Innenring 22 geraten, was das weitergehende Einschieben erschweren oder gar unmöglich machen könnte. Zudem könnten die Teile 10, 20, 40 so miteinander verklemmen, dass sie nicht mehr ohne weiteres voneinander gelöst werden könnten. Oder aber der jeweiligen Nase 44 könnte beispielsweise aufgrund von Scherkräften abgetrennt werden, sodass die Dichtung 40 unbrauchbar würde. Das Kernelement 46 dient also der einfachen und sicheren Montage. Die Muffe 30 klemmt exemplarisch einen ihr zugewandten Vorsprung 49 des Dichtelements 40 ein, der bei den vorbeschriebenen Ausführungen fehlt. Damit kann die Muffe 30 auf einfache Weise vorfixiert werden.

Das Kernelement 46 ist zumindest in Kontaktbereichen des Dichtelements 40 mit den anderen Teilen 10, 20, 30 an den zugehörigen, den Teilen 10, 20, 30 zugewandten Seiten jeweils mit dem elastischen Mantel-element 47 versehen. Das Mantelelement 47 kann also elastisch verformt werden. Im gezeigten Beispiel ist das Kernelement 46 vollumfänglich von dem Mantelelement 47 umgeben. Dies ermöglicht bei einem Kernelement 46 aus Metall beispielsweise einen Schutz vor Korrosion. Das Mantelelement 47 bestimmt die Außenform des Dichtelements 40.

Die Eckausnehmung 33 wird genutzt, die Vorsprünge 49 vorzugsweise geklemmt aufzunehmen. Dies ermöglicht eine Vorfixierung der Muffe 30 und des Dichtelements 40 zueinander. Die Eckausnehmung 33 verfügt ferner über die vorgenannte Anlaufschräge 36, die ein Aufschieben der Muffe 30 auf die Abtriebswelle 10 bzw. das Dichtelement 40 erleichtert.

Der Vorsprung 49 kann auch entfallen. In dem Fall ist der das Kernelement 46 im Querschnitt L-förmig ausgebildet. Zudem kann dann die Ausnehmung 33 entfallen.

Wie vorstehend angegeben, ist das Dichtelement 40 zwischen den Teilen 10, 20, 30 vorzugsweise eingeklemmt. Dies erfolgt erfindungsgemäß mittels Verformens des Mantelelements 47, nicht aber des Kernelements 46. D. h. das Mantelelement schützt das Kernelement 46 vor Verformung und anderer Beschädigung, was der Lebensdauer das Dichtelements 40 und ihrer einfachen Montierbarkeit zugute kommt.

Auch der hier vertikal verlaufende Abschnitt des Kernelements 46 kann entfallen, sofern das Mantelelement 47 in diesem Bereich ausreichend steif ist. Dies vereinfacht die Form des Kernelements 46 und dessen Herstellung.

Die Dichtwirkung des Dichtelements 40 entsteht vorzugsweise zwischen der Fläche 34, der Muffe 30, dem Abschnitt 43 des Dichtelements 40 und dem Innenring 22 des Lagers 20 und gegebenenfalls zwischen dem Innenring 22 des Lagers 20 und der Nase 44 des Dichtelements 40. Um dies zu bewerkstelligen, ist die Muffe 30 so an der Abtriebswelle 10 angebracht, dass das scheibenförmige Element 43 eingeklemmt ist. Dazu weist die Abtriebswelle 10 an ihrem der Muffe 30 zugewandten Ende die vorgenannte Schrauböffnung 14 hier in Form eines mit Innengewinde versehenen Sacklochs auf.

Im in Figur 7 gezeigten Beispiel ist auf das freie Ende der Muffe 30 ein Deckel 60 aufgesetzt. Der Deckel 60 umfasst einen Abdeckabschnitt 61, der auf der dem Lager 20 abgewandten Seite der Muffe 30 aufliegt und so die Muffe 30 optisch nach außen abschließt. An seiner dem Lager 20 zugewandten Seite des Abschnitts 61 schließt sich ein Befestigungsabschnitt 62 hier in Form eines pfostenartigen Vorsprungs an. Dieser ist so gestaltet, dass er in Richtung R_{M} nahezu spielfrei in die Muffe 30 eingeschoben werden kann, sodass der Deckel 60 in der Muffe 30 vorfixiert ist. Er ist vorzugsweise mittig in Bezug auf den Abschnitt 61 angeordnet und vorteilhafterweise komplementär zur Innenkontur 35 der Muffe 30 ausgebildet. Damit werden Muffe 30 und Deckel 60 sicher zueinander in Position gebracht, wenn der Deckel 60 in die Muffe 30 eingeschoben wird.

Der Abdeckabschnitt 61 umfasst hier exemplarisch eine mittig angeordnete, sich in Richtung R_{M} erstreckende, senklochartige Einsetzöffnung, die der Abstützung des Kopfes der Schraube 2 dient. Diese ist im gezeigten Beispiel entsprechend als Senkkopfschraube ausgebildet. Durch das Festschrauben der Schraube 2 in der Schrauböffnung 14 der Abtriebswelle 10 werden Deckel 60 und Muffe 30 an der Abtriebswelle 10 fixiert. Dadurch gelangen die Muffe 30 bzw. ihre Fläche 34 mit dem Dichtelement 40 bzw. dessen scheibenförmigen Element 43 und dieses mit dem Innenring 22 des Lagers bzw. der ihm zugewandten Fläche 24 dieses Innenrings 22 abdichtend in Anlage; die Schraube 2 ist in der Lage, die Muffe 30 über den Deckel 60 derart gegen das Dichtelement 40 zu drücken, dass der Flanschabschnitt 43 abdichtend eingeklemmt wird.

Wie zu erkennen, weist die Abtriebswelle 10 exemplarisch auch am rechten Ende eine Schrauböffnung 15 auf, die vorzugsweise identisch zur Schrauböffnung 14 ausgebildet ist. Alternativ gibt es in der Abtriebswelle 10 nur eine, dagegen durchgehende Schrauböffnung. Beides hat den Vorteil, dass die Abtriebswelle 10 an beiden Enden beispielsweise mit einem Deckel 60 versehen werden kann. Zudem kann die Abtriebswelle 10 dadurch auch am hier rechten Ende aus dem Türantrieb 1 heraus schauen. Im Ergebnis kann dadurch als Beispiel wahlweise an einem Ende ein Abschluss gemäß Fig. 1 oder 7 vorgesehen werden, und am anderen Ende kann ein Gestängearm befestigt werden, verbunden mit der erfindungsgemäßen Abdichtwirkung. Alternativ sind für jedes Wellenende eine Dichtung 40 und eine Muffe 30 vorgesehen.

Hinsichtlich des Lagers 20 sind die Ringe 21, 22 sowie die dazwischen angeordneten Wälzkugeln 25 dargestellt. Ferner sind die Anlaufschrägen 45 der Nasen 44 gezeigt.

Schraube 2 und Deckel 60 können einteilig ausgebildet sein. D. h. beim Montieren wird der Deckel in das Schraubloch 14 mithilfe seines mit einem Außengewinde versehenen Pfostens 62 eingeschraubt. Auch Schraube 2 und Deckel 60 können einteilig ausgebildet sein. Oder aber alle drei Teile sind einteilig ausgebildet. In dem Fall muss das entstehende Abschlussteil 2, 30, 60 in Bezug auf die Abtriebswelle 10 frei rotierbar aufzunehmen sein.

Anstelle des genannten Deckels 60 kann auch nur ein Gestängearm eines Gleit- oder Normalgestänges aufgesetzt sein, an dessen freiem Ende eine Befestigungsschraube in bekannter Weise eingeschraubt ist. Die Muffe 30 kann Teil solch eines Gestängearms sein.

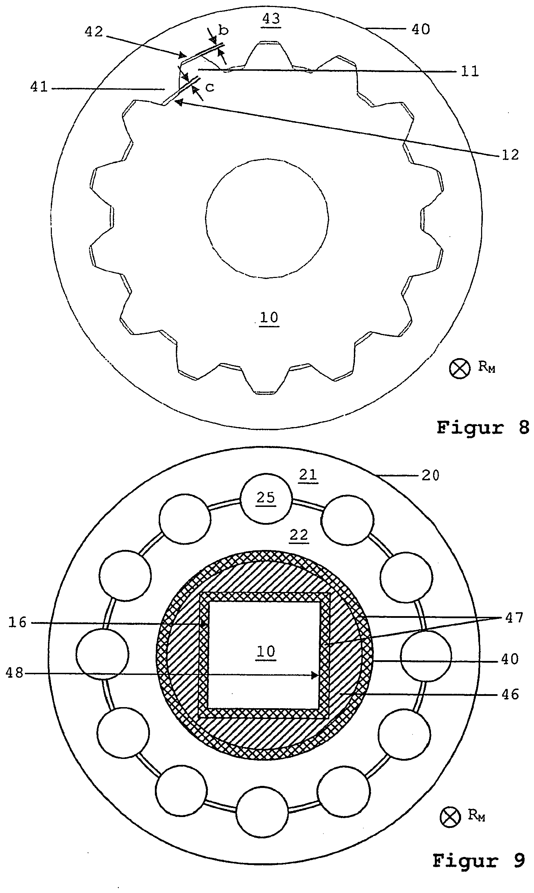

Figur 8 zeigt eine Schnittansicht der Anordnung Dichtelement 40 - Abtriebswelle 10 entlang einer Linie A - A in Figur 3. Alle anderen Teile sind der Beschreibung wegen weggelassen. Wie deutlich zu erkennen, haben die miteinander korrespondierenden Paarungen von Vorsprüngen und Ausnehmungen 11, 42 bzw. 12, 41 jeweils einen Abstand b bzw. c zueinander. D. h. die Vorsprünge 11, 41 sind so gestaltet, dass sie beim reinen Aufschieben des Dichtelements 40 auf die Abtriebswelle 10 nicht vollständig in den korrespondierenden Ausnehmungen 42, 12 zu liegen kommen. Beispielsweise haben die Vorsprünge 11, 41 zu den korrespondierenden Ausnehmungen 42, 12 geometrisch vergrößerte Querschnittsformen. Erst durch das hier nicht dargestellte Lager 20 werden die Vorsprünge 41 in die korrespondierenden Ausnehmungen 12 hinein gedrückt, wodurch die Vorsprünge 11 in die korrespondierenden Ausnehmungen 42 hinein gedrückt werden. Dadurch ist eine Abdichtwirkung zwischen Lager 20 und Abtriebswelle 10 erreichbar. Nicht zuletzt ist noch das scheibenförmige Element 43 zu erkennen.

Figur 9 zeigt eine Dichtanordnung gemäß einer zweiten Ausführungsform der Erfindung in einer Schnittansicht ähnlich zu Figur 8, und zwar mitten durch das Lager 20 hindurch.

Die Abtriebswelle 10 hat, auch wenn hier nicht erkennbar, beispielhaft hauptsächlich eine im Querschnitt kreisrunde Oberflächenkontur 16. Vorzugsweise an beiden Enden nimmt die Oberflächenkontur 16 jeweils die Form eines Außenvierkants an. Um die Abtriebswelle 10 abdichten zu können, weist das Dichtelement 40 eine zu dem jeweiligen Vierkant korrespondierende, geometrisch vorzugsweise verkleinerte Oberflächenkontur 48 auf. Mit dieser ist das Dichtelement 40 auf ein jeweiliges der vierkantförmigen Enden der Abtriebswelle 10 abdichtend aufgeschoben. Daher ist der kreisrunde Bereich der Oberflächenkontur 16 in dieser Darstellung von dem Dichtelement 40 verdeckt.

Aufgrund der im Querschnitt kreisförmig ausgebildeten Außenkontur des Dichtelements 40 ist mehr Raum für das mittels einfacher Schraffur gekennzeichnete Kernelement 46 vorhanden. Das Kernelement 46 ist vorzugsweise entsprechend unterschiedlich ausgebildet. Es ist an einer jeweiligen Seite des Außenvierkants zur jeweiligen Mitte hin verdickt ausgebildet, was der Stabilität des Dichtelements 40 zugute kommt.

Wie ferner zu erkennen, erstreckt sich das Kernelement 46 vorzugsweise auch um die zugewandten Kantenbereiche des vierkantförmigen Endes der Abtriebswelle 10 herum. Dadurch ist das Dichtelement 40 auch in diesem Bereich geschützt, was einer Beschädigung des gesamten Dichtelements 40 aufgrund eines möglichen Einschneidens einer Kante in das Mantelelement 47 entgegenwirkt.

Die Abdichtung erfolgt wie bei der ersten Ausführungsform der Erfindung mithilfe des Mantelelements 47. Das Lager 20 ist also mittels seines Innenrings 22 auf das Dichtelement 40 abdichtend aufgeschoben, und diese ist vorzugsweise eingeklemmt. Zwischen Außenring 21 und Innenring 22 des Lagers 20 sind bekanntermaßen die Wälzkörper 25 angeordnet.

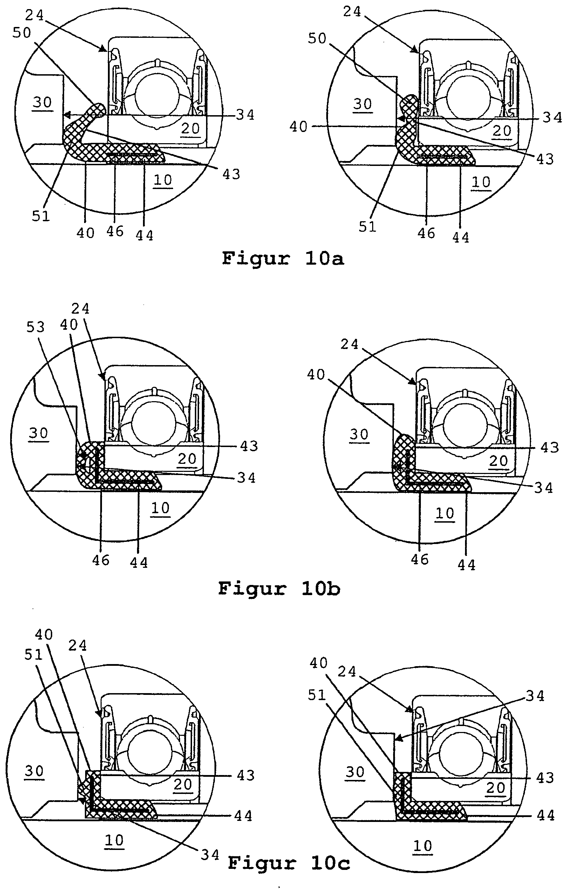

Figur 10a zeigt die Anordnung von Figur 7 im Ausschnitt und mit einem abgewandelten Dichtelement 40. Links ist die Anordnung in einem Zustand gezeigt, in dem sich das Dichtelement 40 hinsichtlich Lager 20 und Muffe 30 im Ausgangzustand befindet. Rechts ist die Anordnung in einem Zustand gezeigt, in dem das Dichtelement 40 zwischen Lager 20 und Muffe 30 eingeklemmt ist und so die gewünschte Dichtwirkung bereitstellt.

Das Kernelement 46 des Dichtelements 40 ist aus formstabilem Material wie Stahl oder dergleichen gebildet. Alternativ oder zusätzlich ist das Kernelement 46 versteift ausgebildet. Er kann beispielsweise Rillen aufweisen, die wie das Kernelement 46 selbst ringförmig ausgebildet sind. Das zwischen Muffe 30 und Lager 20 angeordnete scheibenförmige Element 43 umfasst exemplarisch kein Kernelement und ist demzufolge völlig elastisch ausgebildet. D. h. das Kernelement 46 ist nur zwischen Abtriebswelle 10 und der am Lager 20 angeordneten Nase 44 ausgebildet. Dies hat den Vorteil, dass die Muffe 30 nicht an das Dichtelement 40 angepasst werden muss.

Das scheibenförmige Element 43 ist an seinem freien Ende verdickt ausgebildet und erlaubt so einen gewissen Toleranzausgleich. Die dadurch vorhandene Verdickung 50 kann also je nach Abstand zwischen Muffe 30 und Lager 20 elastisch verformt werden und/oder das scheibenförmige Element 43 selbst zu einer elastischen Verformung bringen (vgl. rechts in Figur 10a), die das Dichtelement 40 insgesamt unter Vorspannung setzt. Sollten Muffe 30 und Lager 20 aufgrund äußerer Einflüsse wie Vibrationen zeitweise voneinander weg und wieder aufeinander zu bewegt werden, sorgt die Verdickung 50 aufgrund der möglichen elastischen Rückverformung dafür, dass das Dichtelement 40 stets mit der Muffe 30 und dem Lager 20 abdichtend in Kontakt steht.

Weiterhin ist erkennbar, dass sich das scheibenförmige Element 43 im Ausgangszustand nicht parallel zu den zugewandten, abzudichtenden Seiten bzw. Flächen 24, 34 des Lagers 20 und der Muffe 30 erstreckt. Es schließt mit der Nase 44 einen spitzen Winkel hier in Richtung Lager 20 ein. Beim Zusammenfahren von Muffe 30 und Lager 20, wenn also die Muffe 30 in Richtung Montageposition bewegt wird, wird das scheibenförmige Element 43 in eine Richtung gedrängt, in die der spitze Winkel größer wird. Im gezeigten Beispiel wird das scheibenförmige Element 43 also nach links gebogen, wie rechts in Figur 10a dargestellt. Dadurch gerät das Dichtelement 40 unter Abdicht-Vorspannung, was dem vorgenannten Toleranzausgleich dient.

Vorzugsweise ist auch der Eckbereich zwischen dem scheibenförmigen Element 43 und der Nase 44 vorzugsweise verdickt ausgebildet, weist also eine Verdickung 51 auf. Dadurch gelangt die Muffe 30 auch im Bereich der Eckausnehmung 33 sicher mit dem Dichtelement 40 in Abdichtkontakt. Zudem ist das Dichtelement 40 besser davor geschützt, dass das scheibenförmige Element 43 und die Nase 44 oder der Eckbereich dazwischen einreißen oder sonst wie beschädigt werden könnten.

Figur 10b zeigt zu Figur 10a analoge Ansichten eines Dichtelements 40 gemäß einer anderen Ausführungsform der Erfindung.

Ihr Kernelement 46 ist diesmal wieder im Querschnitt L-förmig ausgebildet, womit die Formstabilität des Dichtelements 40 zumindest teilweise erlangt wird.

Das scheibenförmige Element 43 schließt einen Hohlraum 53 ein. Aufgrund der ringartigen Ausbildung des Dichtelements 40 bildet das scheibenförmige Element 43 also eine Art Ringschlauch. Drückt die Muffe 30 im Montagezustand das Dichtelement 40 gegen das Lager 20, kann das scheibenförmige Element 43 so weit zusammengedrückt sein, dass vom Hohlraum praktisch nichts übrig bleibt. Es entsteht wieder eine Vorspannung in des Dichtelements 40, verbunden mit dem Vorteil des Toleranzausgleichs.

Figur 10c zeigt ebenfalls zu Figur 10a analoge Ansichten eines Dichtelements 40 gemäß einer wiederum anderen Ausführungsform der Erfindung.

Hier fehlt der Hohlraum 53. Stattdessen weist das scheibenförmige Element 43 beispielhaft an der dem Lager 20 abgewandten Seite eine Verdickung 51 auf, erstreckt sich sonst aber wie bei dem in Figur 10b gezeigten Dichtelement 40. Beim Zusammenfahren von Muffe 30 und Lager 20 wird das scheibenförmige Element 43 im Bereich der Verdickung 51 zusammengedrückt und diese "abgeflacht", wie rechts in Figur 10c gezeigt. Dadurch entsteht wiederum eine Vorspannung diesmal im Bereich der Verdickung 51, verbunden mit dem Vorteil des Toleranzausgleichs.

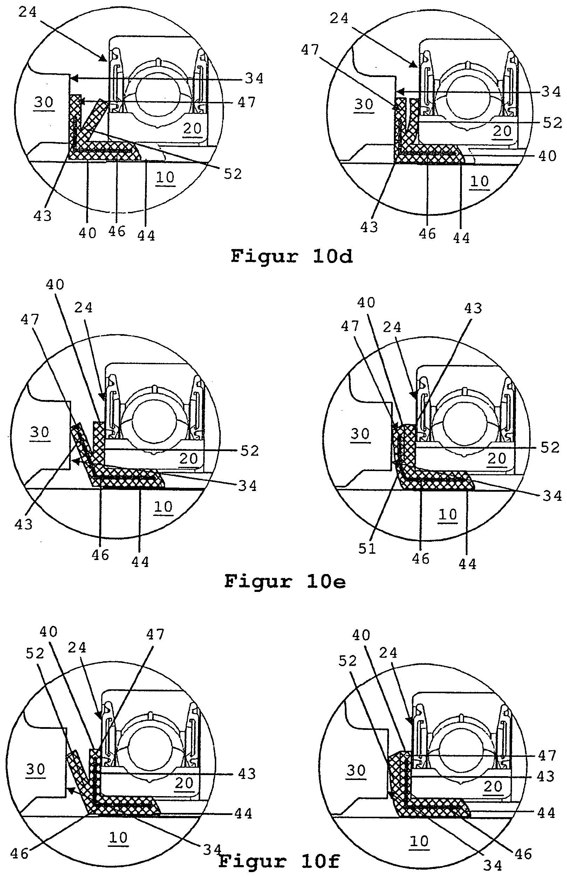

Figur 10d zeigt ebenfalls zu Figur 10a analoge Ansichten mit einem Dichtelement 40 gemäß einer abermals anderen Ausführungsform der Erfindung. Exemplarisch anstelle der Verdickungen 50, 51 ist zwischen dem scheibenförmigen Element 43 und der Nase 44 vorzugsweise im vorgenannten Eckbereich zwischen ihnen ein zusätzlicher Vorsprung 52 angeformt.

Der Vorsprung 52 schließt zu dem scheibenförmigen Element 43 und der Nase 44 jeweils einen spitzen Winkel ein, erstreckt sich also zwischen dem scheibenförmigen Element 43 und der Nase 44 von ihnen weg, wie links in Figur 10d gezeigt. Der Vorsprung 52 besteht aus einem elastischen und vorteilhafterweise demselben Material, aus dem auch das (verbleibende) Mantelelement 47 besteht. Werden Lager 20 und Muffe 30 zusammen bzw. aufeinander zu geschoben, gelangt der Vorsprung 52 in Anlage mit dem Lager 20. Aufgrund des Kernelements 46 gelangen das scheibenförmige Element 43 und der Vorsprung 52 mit der Muffe 30 bzw. dem Lager 20 abdichtend in Anlage bzw. Kontakt. Aufgrund der flexiblen Ausführung des Vorsprungs 52 können Muffe 30 und Lager 20 noch näher zusammen geschoben werden, wodurch das Dichtelement 40 wiederum vorgespannt wird. Dabei wird der Vorsprung 52 hier nach links gebogen, ohne die Abdichtwirkung zu verlieren. Mithin erlaubt diese Lösung ebenfalls den vorgenannten Toleranzausgleich zwischen Muffe 30 und Lager 20 innerhalb eines vorbestimmten Abstandsbereichs zueinander.

Figur 10e zeigt zu Figur 10d analoge Ansichten mit einem dazu abgewandelten Dichtelement 40 gemäß einer wiederum anderen Ausführungsform der Erfindung. Gegenüber der Ausführungsform gemäß Figur 10d schließen das scheibenförmige Element 43 und die Nase 44 einen stumpfen Winkel ein. Der Vorsprung 52 schließt mit der Nase 44 exemplarisch einen rechten Winkel ein. Diese Gestaltung hat den Vorteil, dass nur oder zusätzlich auch das scheibenförmige Element 43 in gewissem Maß gebogen werden kann. Das Kernelement 46 ist hierbei vorteilhafterweise elastisch ausgebildet, beispielsweise aus Federstahl hergestellt. Dadurch kann das das Kernelement 46 umgebende Mantelelement 47 weiter in Richtung Abdichtung und ggf. Verschleißfestigkeit hin optimiert werden, während das Kernelement 46 im Extremfall allein die Vorspannwirkung bereitstellt und damit den vorgenannten Toleranzausgleich ermöglicht.

Figur 10f zeigt zu Figur 10d analoge Ansichten mit einem dazu abgewandelten Dichtelement 40 gemäß einer wiederum anderen Ausführungsform der Erfindung. Im Gegensatz zu Figur 10d ist der Vorsprung 52 nicht zwischen dem scheibenförmigen Element 43 und der Nase 44, sondern an einer der Nase 44 bzw. dem Lager 20 abgewandten Seite des scheibenförmigen Elements 43 angeformt. Werden Lager 20 und Muffe 30 aufeinander zu geschoben, gelangen nunmehr der Vorsprung 52 und das scheibenförmige Element 43 mit der Muffe 30 bzw. dem Lager 20 abdichtend in Anlage bzw. Kontakt. Dabei wird der Vorsprung 52 hier nach rechts gebogen, ohne die Abdichtwirkung zu verlieren, verbunden mit den gleichen Vorteilen wie hinsichtlich Figur 10d.

Die Erfindung ist nicht auf die vorbeschriebenen Ausführungsformen beschränkt.

Auch wenn sie in Bezug auf die Abtriebswelle 10 eines Drehtürantriebs 1 beschrieben wurde, ist sie auf jegliche Welle anwendbar, die gegenüber einem korrespondierenden Element abzudichten ist. Sie ist insbesondere auf jegliche Art von Flügelbetätiger anwendbar, dessen Abtriebswelle abzudichten ist.

Die Anlaufschrägen 13 der Abtriebswelle 10 können an beiden Enden der Abtriebswelle 10 vorgesehen sein. Die Außenkontur der Abtriebswelle 10 kann variieren. Die Eckausnehmungen 33 der Muffe 30 können zu beiden Seiten der Muffe 30 ausgebildet sein. Auch der Innenring 22 des Lagers 20 kann solche Anlaufschrägen aufweisen.

Jedes Dichtelement 40 gemäß Figur 10 kann zusätzlich über einen Vorsprung 49 verfügen, der wie die Nase 44 ausgebildet sein kann. Bei der in Figur 7 gezeigten Ausführungsform kann dementsprechend die Nase 44 oder der Vorsprung 49 fehlen.

Die vorbeschriebenen, am scheibenförmigen Element 43 ausgebildeten Strukturen in Form des Vorsprungs 52, des Hohlraums 53, des Kernelements 46 und der Verdickungen 50, 51 können bei allen anderen Ausführungsformen Anwendung finden, und sowohl am scheibenförmigen Element 43 als auch an den Nasen 44 oder den Vorsprüngen 49 angebracht sein. Das Kernelement 46 kann sich in das scheibenförmige Element 43, die Nasen 44 und alle Vorsprünge 49, 52 hinein erstrecken.

Die Abdichtung der Abtriebswelle 10 gegenüber einem Lager 20 und/oder einer Muffe 30 ist nur exemplarisch. Die hierin beschriebenen Dichtungen können bei allen Vorrichtungen angewendet werden, bei denen eine Abtriebswelle, also ein rotierendes Teil, gegenüber einem korrespondierenden Teil bzw. Element in Bezug auf flüssige oder zähflüssige Medien (z. B. Hydrauliköl) oder aber pastöse Medien (z. B. Schmierfett) abzudichten ist, dient also vorrangig der Verhinderung eines unerwünschten Austritts des jeweiligen Materials bzw. Mediums aus der Vorrichtung oder aber in diese hinein. Das korrespondierende Element kann dabei relativ zur Welle mit einer anderen Geschwindigkeit und/oder Richtung bewegbar oder auch feststehend sein.

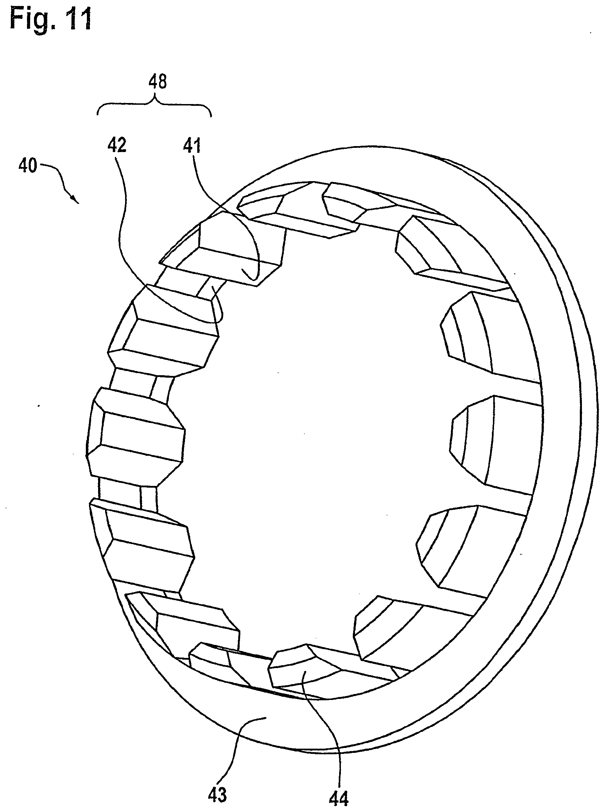

Fig. 11 zeigt eine schematische Ansicht eines Dichtelements 40 gemäß einer weiteren Ausführungsform der Erfindung. Hierbei ist der Aufbau des Dichtelements 40 deutlich erkennbar. So umfasst das Dichtelement 40 ein scheibenförmiges Element 43, an dessen Innenfläche sich axial Nasen 44 erstrecken. Insbesondere erstrecken sich die Nasen rotationssymmetrisch an dem scheibenförmigen Element 43.

Sowohl die Nasen 44 als auch das scheibenförmige Element 43 bilden eine Oberflächenkontur 48 der Innenfläche 41, 42 des Dichtelements 40. Insbesondere stellen die Nasen 44 einen Vorsprung 41 dar, während zwischen den Nasen 44 Ausnehmungen 42 in das scheibenförmige Element 43 eingebracht sind.

Insbesondere sind die Nasen 44 keilförmig ausgebildet, so dass diese in ebenso keilförmige Ausnehmungen der Abtriebswelle 10 eingreifen können. Es ist ersichtlich, dass die Nasen 44 somit als Radialdichtung dienen können, während das scheibenförmige Element 43 als Axialdichtung dient.

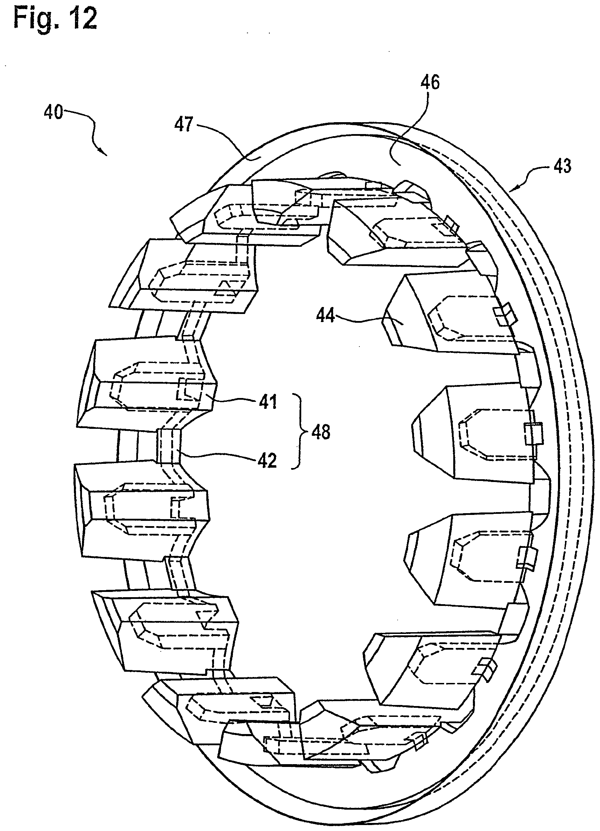

Fig. 12 zeigt das Dichtelement 40 aus Fig. 11, jedoch in einer transparenten Ansicht. Somit ist aus Fig. 12 ersichtlich, dass das Dichtelement 40 ein Kernelement 46 aufweist, das von einem Mantelelement 47 umgeben ist. Insbesondere ist das Kernelement 46 vollständig von dem Mantelelement 47 umgeben, so dass das Kernelement 46 von außen nicht zugänglich ist. Insbesondere kann das Kernelement 46 ein metallischer Werkstoff sein, der durch die Ummantelung mit dem Mantelelement 47 vor Korrosion geschützt ist.

Das Mantelelement 47 ist insbesondere ein Elastomer und dadurch elastisch sehr leicht verformbar. Wie zuvor beschrieben, sind die Nasen 44 in Ausnehmungen der Abtriebswelle 10 einpressbar, so dass eine elastische Rückstellkraft eine Abdichtwirkung erzeugt. Das Dichtelement 40 kann daher eine sehr sichere und zuverlässige Abdichtung sicherstellen, wobei dennoch eine einfache Handhabung des Dichtelements 40 durch das steife Kernelement 46 sichergestellt ist. Dazu ist insbesondere vorgesehen, dass das Kernelement 46 steifer ausgebildet ist als das Mantelelement 47.

Im Ergebnis schafft die Erfindung eine sehr einfach aufgebaute und zu montierende sowie preiswert herstellbare Wellendichtung, die dennoch eine sehr gute Dichtwirkung erreicht. Insbesondere hat diese Art von Dichtung den Vorteil, an sich nicht zueinander passende Wellen und korrespondierende Elemente sicher abzudichten, was den Einsatzbereich der Dichtung enorm vergrößert.

### Bezugszeichenliste

- 1: Flügelbetätiger
- 2: Schraube
- 3: Gehäuse
- 4: Zahnrad
- 5: Rollenhalterung
- 6: Andruckrolle
- 7: Lageröffnung
- 8: Nocke

- 10: Abtriebswelle
- 11: Vorsprung
- 12: Ausnehmung
- 13: Anlaufschräge
- 14: Schrauböffnung
- 15: Schrauböffnung
- 16: Oberflächenkontur

- 20: Lager
- 21: Außenring
- 22: Innenring
- 23: Innenfläche
- 24: Dichtfläche
- 25: Wälzkugel

- 30: Muffe
- 31: Vorsprung
- 32: Ausnehmung
- 33: Freimachung
- 34: Anlagefläche
- 35: Innenkontur
- 36: Anlaufschräge

- 40: Dichtelement
- 41: Vorsprung
- 42: Ausnehmung
- 43: Flansch
- 44: Nase
- 45: Anlaufschräge
- 46: Kernelement
- 47: Mantelelement
- 48: Oberflächenkontur
- 49: Vorsprung
- 50: Verdickung
- 51: Verdickung
- 52: Vorsprung
- 53: Hohlraum

- 60: Deckel
- 61: Abdeckabschnitt
- 62: Vorsprung

- a: Abstand
- b: Abstand
- c: Abstand

- R_{M}: Montagerichtung

## Patentansprüche

1. Dichtanordnung, umfassend eine Welle (10) sowie ein Dichtelement (40) mit einem ringförmigen Grundkörper, wobei eine Oberflächenkontur (48) einer Innenfläche (41, 42) des Grundkörpers komplementär zu einer Oberflächenkontur (16) einer Außenfläche (11, 12) der Welle (10) ist, so dass die Innenfläche (41, 42) des Grundkörpers über den gesamten Umfang der Welle (10) mit der Außenfläche (11, 12) der Welle in Kontakt bringbar ist, um eine dichtende Verbindung zwischen Dichtelement (40) und Welle (10) zu erzeugen, wobei zumindest ein Vorsprung (41) des Dichtelements (40) in eine Ausnehmung (12) der Welle (10) eingreift und/oder zumindest ein Vorsprung (11) der Welle in eine Ausnehmung (42) der Dichtung (40) eingreift, **dadurch gekennzeichnet, dass** der Grundkörper des Dichtelements (40) ein Kernelement (46) aufweist, das von einem Mantelelement (47) vollständig umgeben ist, wobei ein Elastizitätsmodul des Kernelements (46) einen Wert zwischen dem 20-fachen und dem 200-fachen des Elastizitätsmoduls des Mantelelements (47) beträgt.

2. Dichtanordnung nach Anspruch 1, **dadurch gekennzeichnet, dass** der Grundkörper des Dichtelements (40) ein sich radial erstreckendes scheibenförmiges Element (43) und eine Vielzahl von Nasen (44) aufweist, wobei sich die Nasen (44) von dem scheibenförmigen Element (43) aus axial erstrecken.

3. Dichtanordnung nach Anspruch 2, **dadurch gekennzeichnet, dass** jede Nase (44) zum Eingriff in eine komplementäre Ausnehmung (12) der Welle (10) ausgebildet ist.

4. Dichtanordnung nach einem der Ansprüche 2 oder 3, **dadurch gekennzeichnet, dass** die Nasen (44) als Radialdichtung ausgebildet sind und/oder das scheibenförmige Element (43) aus Axialdichtung ausgebildet ist.

5. Dichtanordnung nach einem der vorhergehenden Ansprüche, **dadurch gekennzeichnet, dass** die Oberflächenkontur (48) der Innenfläche (41, 42) des Grundkörpers, insbesondere elastisch, verformbar ist, wobei des Dichtelement (40) durch eine elastische Rückstellkraft an die Welle (10) anpressbar ist.

6. Dichtanordnung nach Anspruch 1, **dadurch gekennzeichnet, dass** das Kernelement (46) steifer als das Mantelelement (47) ausgebildet ist.

7. Dichtanordnung nach einem der Ansprüche 1 oder 7, **dadurch gekennzeichnet, dass** das Kernelement (46) aus einem metallischen Werkstoff und/oder aus einem Kunststoff gefertigt ist und/oder das Mantelelement (47) aus einem Elastomer gefertigt ist.

8. Dichtanordnung nach einem der vorhergehenden Ansprüche, **dadurch gekennzeichnet, dass** das Dichtelement (40) einem Schmiermittel, insbesondere einem Schmierfett, aussetzbar ist und eine Dichtigkeit gegen ein Kriechverhalten des Schmiermittels sicherstellt.

9. Dichtanordnung nach einem der vorhergehenden Ansprüche, **dadurch gekennzeichnet, dass** das Dichtelement (40) gegen Schmiermittel, insbesondre gegen Schmierfett, beständig ist.

10. Flügelbetätiger (1), insbesondere zum Bewegen eines mit dem Flügelbetätiger verbundenen Flügels einer Türe, umfassend:
- ein Gehäuse (3),
- einen in dem Gehäuse (3) angeordneten Antriebsabschnitt (4, 5, 6, 10), wobei der Antriebsabschnitt (4, 5, 6, 10) eine Abtriebswelle (10), insbesondere eine Zahnwelle oder Keilwelle, aufweist, die aus dem Gehäuse (3) herausragt und mit dem Flügel verbindbar ist, um eine von dem Antriebsabschnitt (4, 5, 6, 10) erzeugte Bewegung auf den Flügel aufzubringen, und
- zumindest eine Dichtanordnung nach einem der vorhergehenden Ansprüche, wobei das Dichtelement (40) auf der Abtriebswelle (10) aufgebracht ist.

11. Flügelbetätiger (1) nach Anspruch 10, **dadurch gekennzeichnet, dass** das Dichtelement (40) die Abtriebswelle (10) zu dem Gehäuse (3) oder zu einem Lager (20) der Abtriebswelle (10) abdichtet.

## Claims

1. A sealing arrangement, comprising a shaft (10) as well as a sealing element (40) with a ring-shaped basic body, wherein a surface contour (48) of an interior surface (41, 42) of the basic body is complementary to a surface contour (16) of an exterior surface (11, 12) of the shaft (10), such that the interior surface (41, 42) of the basic body, over the entire circumference of the shaft (10), may be brought into contact with the exterior surface (11, 12) of the shaft in order to generate a sealing connection between the sealing element (40) and the shaft (10), wherein at least one projection (41) of the sealing element (40) engages in a recess (12) of the shaft (10) and/or at least one projection (11) of the shaft engages in a recess (42) of the shaft (40), **characterized in that** the basic body of the sealing element (40) includes a core element (46), which is completely surrounded by an enveloping element (47), wherein a modulus of elasticity of the core element (46) has a value of between 20 times and 200 times of the modulus of elasticity of the enveloping element (47).

2. The sealing arrangement according to claim 1, **characterized in that** the basic body of the sealing element (40) includes a radially extending disc-shaped element (43) and a plurality of noses (44), wherein the noses (44) axially extend starting from the disc-shaped element (43).

3. The sealing arrangement according to claim 2, **characterized in that** each nose (44) is configured for the engagement in a complementary recess (12) of the shaft (10).

4. The sealing arrangement according to any of the claims 2 or 3, **characterized in that** the noses (44) are configured as a radial seal and/or the disc-shaped element (43) is configured as an axial seal.

5. The sealing arrangement according to any of the preceding claims, **characterized in that** the surface contour (48) of the interior surface (41, 42) of the basic body is deformable, in particular elastically, wherein the sealing element (40) may be pressed against the shaft (10) by means of an elastic restoring force.

6. The sealing arrangement according to claim 1, **characterized in that** the core element (46) is configured to be more rigid than the enveloping element (47).

7. The sealing arrangement according to any of the claims 1 or 7, **characterized in that** the core element (46) is manufactured from a metallic material and/or from a plastic material and/or the enveloping element (47) is manufactured from elastomer.

8. The sealing arrangement according to any of the preceding claims, **characterized in that** the sealing element (40) may be exposed to a lubricant, in particular to grease, and ensures a tightness against creeping properties of the lubricant.

9. The sealing arrangement according to any of the preceding claims, **characterized in that** the sealing element (40) is resistant to lubricant, in particular against grease.

10. A leaf actuator (1), in particular for moving a leaf of a door, which leaf is connected to the leaf actuator, comprising:
- a housing (3),
- a driving section (4, 5, 6, 10) disposed within the housing (3), wherein the driving section (4, 5, 6, 10) includes an output shaft (10), in particular a toothed shaft or a splined shaft, which protrudes from the housing (3) and may be connected to the leaf, in order to apply a movement to the leaf, which movement hast been generated by the driving section (4, 5, 6, 10), and
- at least one sealing arrangement according to any of the preceding claims, wherein the sealing element (40) is placed onto the output shaft (10).

11. The leaf actuator (1) according to claim 10, **characterized in that** the sealing element (40) seals the output shaft (10) in relation to the housing (3) or in relation to a bearing (20) of the output shaft (10).

## Revendications

1. Agencement d'étanchéité comportant un arbre (10) ainsi qu'un élément d'étanchéité (40) avec un corps de base de forme annulaire, le contour de surface (48) d'une surface intérieure (41, 42) du corps de base étant complémentaire à un contour de surface (16) d'une surface extérieure (11, 12) de l'arbre (10), de sorte que la surface intérieure (41, 42) du corps de base sur toute la circonférence de l'arbre (10) peut être mise en contact avec la surface extérieure (11, 12) de l'arbre, pour générer une connexion étanchéifiante entre l'élément d'étanchéité (40) et l'arbre (10), au moins une protubérance (41) de l'élément d'étanchéité (40) s'engrenant dans un évidement (12) de l'arbre (10) et/ou au moins une protubérance (11) de l'arbre s'engrenant dans un évidement (42) de l'élément d'étanchéité (40), **caractérisé en ce que** le corps de base de l'élément d'étanchéité (40) présente un élément noyau (46), lequel est entièrement entouré par un élément d'enveloppement (47), un module d'élasticité de l'élément noyau (46) ayant une valeur entre 20 fois et 200 fois du module d'élasticité de l'élément d'enveloppement (47).

2. Agencement d'étanchéité selon la revendication 1, **caractérisé en ce que** le corps de base de l'élément d'étanchéité (40) présente un élément (43) en forme de disque s'étendant radialement et une pluralité de nez (44), les nez (44) s'étendant axialement depuis l'élément (43) en forme de disque.

3. Agencement d'étanchéité selon la revendication 2, **caractérisé en ce que** chaque nez (44) est aménagé pour l'engrènement dans un évidement (12) complémentaire de l'arbre (10).

4. Agencement d'étanchéité selon la revendication 2 ou 3, **caractérisé en ce que** les nez (44) sont aménagés comme joint radial et/ou l'élément (43) en forme de disque est aménagé comme joint axial.

5. Agencement d'étanchéité selon l'une des revendications précédentes, **caractérisé en ce que** le contour de surface supérieure (48) de la surface intérieure (41, 42) du corps de base est tout particulièrement élastiquement déformable, l'élément d'étanchéité (40) étant susceptible d'être pressé contre l'arbre (10) au moyen d'une force de rappel élastique.

6. Agencement d'étanchéité selon la revendication 1, **caractérisé en ce que** l'élément noyau (46) est aménagé plus raide que l'élément d'enveloppement (47).

7. Agencement d'étanchéité selon l'une des revendications 1 ou 7, **caractérisé en ce que** le l'élément noyau (46) est fabriqué d'une matière métallique et/ou d'une matière plastique et/ou que l'élément d'enveloppement (47) est fabrique en élastomère.

8. Agencement d'étanchéité selon l'une des revendications précédentes, **caractérisé en ce que** l'élément d'étanchéité (40) peut être exposé à un lubrifiant, tout particulièrement à une graisse lubrifiante, et garantit une étanchéité contre un comportement de fluage du lubrifiant.

9. Agencement d'étanchéité selon l'une des revendications précédentes, **caractérisé en ce que** l'élément d'étanchéité (40) est résistant au lubrifiant, tout particulièrement à la graisse lubrifiante.

10. Actionneur de vantail (1), tout particulièrement pour déplacer un vantail d'une porte, lequel est relié à l'actionner de vantail, comportant:
- un boitier (3),
- une section d'entraînement (4, 5, 6, 10) agencée dans le boîtier (3), la section d'entraînement (4, 5, 6, 10) présentant un arbre de sortie (10), tout particulièrement un arbre denté ou arbre cannelé, lequel fait saillie du boîtier (3) et peut être relié au vantail pour appliquer un mouvement sur le vantail, mouvement généré par la section d'entraînement (4, 5, 6, 10), et
- au moins un agencement d'étanchéité selon l'une des revendications précédentes, l'élément d'étanchéité (40) étant placé sur l'arbre d'entraînement (10).

11. Actionneur de vantail (1) selon la revendication 10, **caractérisé en ce que** l'élément d'étanchéité (40) étanchéifie l'arbre de sortie (10) en direction du boîtier (3) ou en direction d'un palier (20) de l'arbre de sortie (10).
